# EUROPEAN PATENT APPLICATION

(11) **EP 1 772 361 A1**
(43) Date of publication of application: **11.04.2007**
(21) Application number: 05778862.2
(22) Date of filing: 15.07.2005
(51) Int. Cl.: B62J 17/08

(54) **STRUCTURE FOR BICYCLE**

(30) Priority: 15.07.2004 ES 200401754 U
(71) Applicant: Murcia Multimedia, S.L., 30110 Murcia (ES)
(72) Inventor: FERNÁNDEZ SALINAS, Antonio, E-30110 Murcia (ES); FERNÁNDEZ SALINAS, Alberto, E-30110 Murcia (ES)
(74) Representative: Carvajal y Urquijo, Isabel
(86) International application number: PCT/ES2005/000401
(87) International publication number: WO 2006/018466

(57) **Abstract**

The invention relates to a bicycle structure comprising a front support (1) integrally fixed to a frame (11) of the bicycle in an advanced position with respect to the handlebar (10), and a rear support (2), also integral with the frame (11) and in a back position with respect to a seat (12) of the bicycle. Located between both supports (1,2) are two flexible rods (3) used as a support to a roof (4) providing protection with respect to the elements of the weather.

A plurality of tensioning devices (5) ensures the relative position of the rods (3) and ensures that the roof (4) is tensioned at all times.

## Description

### Object of the Invention

As indicated by the title of this specification, the present invention relates to a structure that is integrally fixed to a bicycle frame for the purpose of coupling a roof to thus provide protection for the cyclist steering the bicycle.

### Background of the Invention

The invention is based on the need to be able to ride a bicycle being protected from any of the adverse conditions that may arise, such as UV radiations, rain, etc.

Protective devices for cyclists steering the bicycle are known. Said devices are grouped into two classes:
First, there is a family of large devices which have the problem of providing great drag, therefore causing instability and a lack of safety for the cyclist
Other devices enclose the cyclist inside a structure, protecting him or her from the rain but blocking vision of the controls (brakes, handlebar, etc.) of the bicycle, and thus causing a clear lack of safety.

The existence of structures or roofs for bicycles is also known having a support integral with the frame and another one elastically attached to the handlebar. Said elastic connection causes an increase of the vibrations of the roof transmitted to the handlebar, and therefore they considerably increase the difficulty of steering, furthermore being particularly dangerous in strong wind conditions given that this type of structures have a high mobility and cause strong impacts against the handlebar, and sometimes the user, making steering completely unstable.

### Description of the Invention

A series of advantages of the invention described in this application can be listed:
Having seen the state of the art, the basic novelty of the invention is the coupling of the necessary supports to the frame of the bicycle, being integrally connected thereto, allowing a completely free mobility of the handlebar without at all interfering with any of its functions, the assembly providing a series of features to the steering of the bicycle which considerably improve safety and the sensation of stability.

One of the first advantages provided by these supports is that when a flexible structure is coupled to the frame of the bicycle, the latter absorbs part of the vibrations occurring when the bicycle is traveling on uneven paths, such as rural roads, brick roads, etc...

It must also be pointed out that it protects the cyclist from any adverse weather conditions that may arise when traveling on the bicycle, especially from receiving direct sun on the rider's head, thus preventing the harmful consequences of sunstroke.

With this invention it is also possible to travel on or ride a bicycle more comfortably, ensuring that the bicycle rider will be protected from the harmful effects caused during the time of day when the sun is most dangerous.

Furthermore, the time that the bicycle can be used is thus increased, allowing being able to ride on it at any time and under any conditions.

The advantage that drivers of motorized vehicles will more easily detect the bicycle provided by the invention and will follow the necessary safety measures given that the height of the assembly of the bicycle is slightly increased, must also be mentioned.

Visibility of the bicycle can be increased making the structure especially visible with very colorful and eye-catching designs, conferring this invention with the capability of being customized according to the tastes of the client-user of this invention. Furthermore, this customization can be carried out by incorporating advertisements, providing high visibility for the advertiser, and given the advantages of the structure, providing a high degree of use for the carrier of the structure.

The bicycle structure of the invention is formed by a front support integrally fixed to a bicycle frame by first connection means, such as a flange. The front support has two fixing elements, one on each side of the bicycle, in an advanced position with respect to a handlebar of the bicycle.

Furthermore, a rear support is integrally connected to the frame, but not necessarily to said frame directly. Two attachment elements are assembled in this rear support, in a back position with respect to a seat of the bicycle. Like the fixing elements, each of the attachment elements is located on one side of the bicycle.

Located between the fixing elements and the attachment elements are respective long flexible rods such that two arches are formed in approximately vertical planes without these rods intersecting one another. A roof made of a suitable material, such as a resistant fabric, is supported in these arches.

The connection of the roof to the rods can be done by creating posts on the longitudinal edges of the roof where the rods are introduced. Said posts could be easily eliminated without needing to disassemble the entire structure if the closure of the posts is done using self-adhesive cloths (for example by means of the system with the commercial name of Velcro), zippers, buttons, hooks, etc.

The rods are separated by means for keeping the roof tensioned which, according to an embodiment of the invention, can be formed by transverse tensioning devices carried out by rods with a length that is approximately equal to the width of the handlebar. These tensioning devices can be fixed to the roof along its entire length, or to the rods at their ends.

According to an embodiment of the invention, each tensioning device has a different length, the longest tensioning devices being in the center and they become smaller as they approach the transverse edges of the roof. The tensioning devices closest to said edges will have a length that somewhat exceeds the distance between both fixing elements and the distance between both attachment elements, so as to not subject the rods to unnecessary bending stress.

The front support can comprise a T-shaped structure, in which the first fixing means are located at the free end of the vertical section, and the fixing elements are located at both ends of the horizontal section.

To prevent the rotation of the handlebar from affecting the front support or the rods supported in said front support, the support is located under the rotation area of the handlebar, and the fixing elements are spaced from a shaft of the handlebar by a distance exceeding half the width of the handlebar Furthermore, neither the fixing elements nor the front support enter the rotation area of a front wheel of the bicycle.

According to an embodiment of the invention, the arches formed by the rods may vary in size making said rods couple to the fixing or attachment elements at points located at varying distances from the ends of said rods.

According to more advanced embodiments, the front and rear supports can be used to fix baskets, lights, reflective lamps, banderoles, racks and any other element of interest for being assembled on a bicycle.

### Brief Description of the Drawings

Figure 1 shows a bicycle with the invention assembled thereon indicating the front support (1) attached to the frame through the flange (6), rear support (2), rods (3), the protective roof (4) and the tension rods (5).
Figure 2 shows the front support, where the flange (6) for the attachment to the frame of the bicycle and fixing elements (7) for fixing the rods to the support are indicated.
Figure 3 shows the rear support which, in the case of this embodiment, is attached to the rack of the bicycle through the openings (9). The fixing elements (8) for fixing the rods to the support are indicated.

### Description of an Embodiment

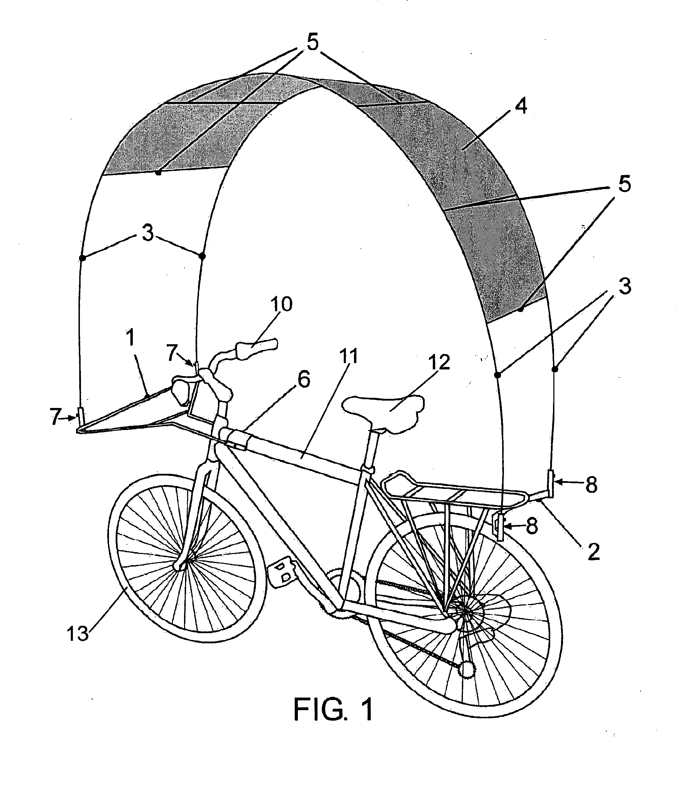

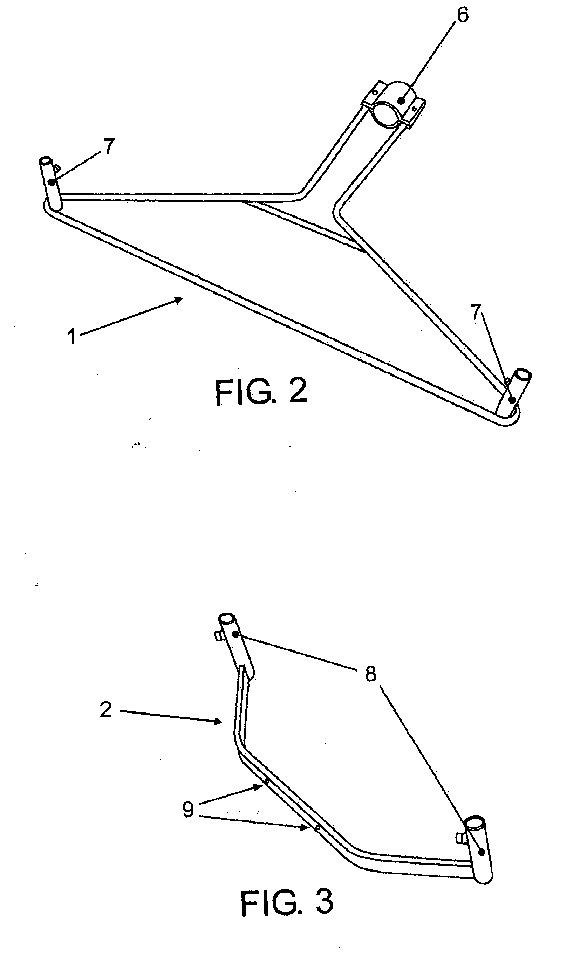

As shown in Figures 1 to 3, the device of the invention consists of a front support (1) made from a structure projecting from in front of a handlebar (10) of the bicycle. According to an embodiment, the front support (1) has an approximate T-shape and comprises a horizontal cross-member perpendicular to a bar of a frame (11) of the bicycle, where two fixing elements (7) are placed. Each fixing element (7) is located at an end of the cross, one at the right end and another one at the left end.

The fixing elements (7) support two ends of respective rods (3) used to support the roof (4). The width of the support (1) will be approximately equal to the width of the handlebar (10) of the bicycle to prevent the invention from projecting from the span of the bicycle.

The front support (1) is fixed to the frame (11) of the bicycle by suitable first connection means, such as a flange (6) located at the free end of the vertical section of the T. The attachment of the front support (1) is carried out to the frame (11) of the bicycle so that the entire device is integral with the frame and is not affected by the movement of the handlebar (10), nor does it affect said movement or the movement of a front wheel (13) of the bicycle. To that end, the distance from the shaft of the handlebar (10) to the fixing elements (7) will be greater than half the width of the handlebar (10), and the front support (1) will be located in a plane above the front wheel (13)

A rear support (2) fixes the ends of the rods (3) which are not fixed to the front support (1). This rear support (2) will be attached to an element of the bicycle that is integral with the frame (11), there possibly existing several fixing areas and methods.

For example, if the bicycle has a rack, it will be attached thereto using screws passing through openings (9) arranged in the rear support (2). If the bicycle does not have a rack, the rear support (2) will be attached to the rear fork of the frame (11) to the post of a seat (12) of the bicycle, or to any other suitable point, to which end the corresponding modifications of the rear support (2) will be made. These modifications may comprise, for example, assembling an extension of the rear support (2) for ensuring that the ends of the rods (3) are attached to the rear support (2) behind the seat (12).

Like the front support (1), the rear support (2) will have two fixing elements (8) where the rods (3) of the structure of the roof (4) will be coupled, such that the right rod (3) will go from the right fixing element (7) of the front support (1) to the right attachment element (8) of the rear support (2), and the left rod (3) will follow a similar path, so that they define considerably parallel arches.

The rods (3) must be long enough to produce the desired arch, which will depend on the height of the person, the height of the seat, the bicycle model, the bicycle size, etc. They will be made of a flexible and bend resistant material. If the arch of the rod (3) is to be reduced, it is possible to vary the fixing of said rods (3) to the fixing or attachment elements (7,8). To that end, the distance to the end of the rod (3) to which the connection with said fixing or attachment elements (7,8) is carried out is varied.

To prevent the rods (3) from moving with respect to one another, a series of transverse tensioning devices (5), for example made with rods having a length that is similar to width of the handlebar (10), will be assembled in the roof (4). It is possible for each of the tensioning devices (5) to have a different length, in which case the central tensioning devices (5) will have a longer length, and as they approach the ends of the rods (3) their length will be reduced until having a length that slightly exceeds the width of the supports (1,2). The tensioning devices (5) will ensure that the roof (4) is tensioned on the rods (3) so that deformations do not occur and to thus ensure most of the protective surface.

The roof (4) is made of a suitable material so that it can carry out its main purpose, which is to protect against any weather element, such as an impermeable cloth or resistant plastic. The roof (4) will be flexible and the manner of attaching it to the rods (3) will be such that it allows quickly assembling and disassembling it.

It could preferably be disassembled without having to completely disassemble the main structure when it is necessary to remove it for any reason. This can be done by assembling two closure systems (zipper, buttons, hooks, self-adhesive fabric strips,...) allowing an end portion of the roof (4) to surround the rods (3), forming respective posts on the longitudinal edges.

Due to the nature of the front support (1), a basket can be coupled for many uses. In the case of the rear support (2), the invention contemplates a support for being able to attach elements such as a backpack, a child seat, etc. Other elements can form part of the supports (1,2), such as for example lights, reflective lamps, racks, banderoles,...

The described invention can be applied to all bicycle models and sizes, its application to children's bicycles being of special interest, thus protecting the child from the harmful action of the sun and greatly increasing visibility.

The variations provided for being adapted to different bicycle models will basically be carried out on the flange (6) for the attachment to the frame and on the rear support (2) given that these are the points of connection of the invention to the bicycle.

The assembly of the invention is done through the following steps:
- The flange (6) for the attachment to the frame will be adapted together with the front support (1). It will be provided that the front support (1) is as horizontal as possible.
- Then the rear support (2) will be assembled. According to the bicycle model, it will be fixed to the post of the seat (12), to the rack, or to the rear part of the frame (11). Figure 1 shows it attached to the rack.
- Then the two main rods (3) of the structure will be assembled, suitably fixing them with their corresponding screws or the like to the attachment and fixing elements (7,8).
- Then the roof (4) will be assembled, which will be designed with the suitable shape so that it is adapted to the rods (3).
- Finally the tensioning rods (5) will be assembled, which will be adjustable so as to provide maximum effectiveness, tensioning the roof (4).

## Claims

1. A bicycle structure suitable for providing protection to the rider of a bicycle, said bicycle having a bicycle frame (11), a seat (12), a front wheel (13), a rear wheel and a handlebar (10) with a shaft of the handlebar (10), with a front side and a rear side defined according to the normal forward movement direction of the bicycle, **characterized in that** it is formed by:
a front support (1) integrally fixed to the frame (11) of the bicycle by first connection means, having two fixing elements (7), one on each side of the bicycle, in an advanced position with respect to the handlebar (10) of the bicycle, and at a distance from the shaft of the handlebar (10) exceeding half the width of said handlebar (10) and outside the rotation area of the front wheel (13) of the bicycle;
a rear support (2) integrally attached to the frame (11) of the bicycle, with two attachment elements (8) also located one on each side of the bicycle in a back position with respect to the seat (12);
two flexible rods (3) coupled to the fixing and attachment elements (7,8), forming respective arches which do not intersect one another; and
a roof (4) connected to the rods (3) and located between the arches defined by said rods (3) with means for keeping said roof (4) tensioned.

2. A bicycle roof structure according to claim 1, **characterized in that** the means for keeping the roof (4) tensioned comprise a plurality of tensioning devices (5) transverse to the rods (3).

3. A bicycle roof structure according to any of claims 1 to 2, **characterized in that** the front support (1) comprises a T-shaped structure, with the first connection means at the free end of the vertical section of the T, and the fixing elements (7) at the ends of the horizontal section.

4. A bicycle roof structure according to any of claims 1 to 3, **characterized in that** the length of the parallel arches formed by the rods (3) is adjustable by means of variation at the anchoring point of the rods (3) to the fixing and attachment elements (7,8).

5. A bicycle roof structure according to any of claims 1 to 4, **characterized in that** the connection of the roof (4) to the rods (3) can be disassembled.

6. A bicycle roof structure according to any of claims 1 to 5, **characterized in that** the supports (1,2) have an element selected between baskets, a rack, a support, lights, lamps, banderoles and combinations thereof.

7. A bicycle roof structure according to any of claims 1 to 6, **characterized in that** the first fixing means comprise a flange (6) coupled to the frame (11) of the bicycle.

8. A bicycle roof structure according to any of claims 1 to 7, **characterized in that** the roof (4) is decorated with advertisements.
